# EUROPÄISCHE PATENTSCHRIFT

(11) **EP 0 421 164 B1**
(45) Veröffentlichungstag und Bekanntmachung des Hinweises auf die Patenterteilung: **30.03.1994**
(21) Anmeldenummer: 90117616.4
(22) Anmeldetag: 13.09.1990
(51) Int. Cl.: B65G 15/64, B65G 43/02

(54) **Verfahren und Vorrichtung zur Überwachung des Bandlaufs eines Förderbandes oder einer Bandwaage**
Method and device for controlling the belt run of a conveyor belt or of a belt weigher
Méthode et dispositif pour contrôler le déroulement de la bande d'une bande transporteuse ou d'une bascule courroie

(30) Priorität: 05.10.1989 DE 3933196
(43) Veröffentlichungstag der Anmeldung: 10.04.1991
(73) Patentinhaber: CARL SCHENCK AG, D-64273 Darmstadt (DE)
(72) Erfinder: Biebel, Jürgen, D-6090 Rüsselsheim (DE)

(56) Entgegenhaltungen:
- DD-A- 239 390
- DE-A- 2 243 579
- US-A- 3 701 464
- US-A- 4 557 372

## Beschreibung

Die Erfindung betrifft ein Verfahren und eine Vorrichtung zur Überwachung des Bandlaufs eines Förderbandes (einer Bandwaage oder Dosierbandwaage) mit einem am Förderband angeordneten Markierungselement und einem fest angeordneten Sensor zur Abtastung des Markierungselements.

Bei Förderbändern und Bandwaagen oder Dosierbandwaagen ist es bekannt, den Bandlauf zu überwachen, und zwar in Bezug auf den Bandschlupf und auf die seitliche Abweichung des Bandes von einer vorgegebenen Mittelstellung. Der Bandschlupf kann durch eine Markierung am Band und einen fest angeordneten Sensor, der mit der Markierung zusammenwirkt bzw. durch die Markierung beaufschlagt wird, leicht bestimmt werden, wenn die Bandsollgeschwindigkeit bekannt ist. Als Sensoren können z. B. induktive Aufnehmer verwendet werden, die einen Impuls abgeben, wenn die Markierung an ihnen vorbeiläuft.

Der seitliche Bandablauf bzw. die Seitenabweichung des Bandes von einer vorgegebenen Mittelstellung kann durch Endschalter mit am Band seitlich anlaufenden Abtastelementen überwacht werden, die an einer oder an beiden Bandseiten angeordnet sind und durch das Band in seitlicher Richtung betätigt werden. Endschalter bedingen jedoch einen größeren Bauaufwand und erhöhen die Störanfälligkeit der Überwachungsanordnung.

Bei einem bekannten Verfahren zur Geradlaufsteuerung eines Förder- oder Transportbandes wird während des Betriebs der wirksame Trommelhalbmesser einer Umlenk- oder Antriebstrommel an der zur Trommelmitte hin ablaufenden Seite des Bandes vergrößert und dadurch eine Rückführung des ablaufenden Bandes in Mittelstellung bewirkt (DE-OS 29 36 344). Eine solche Anordnung ist jedoch beispielsweise für Bandwaagen nicht ohne weiteres geeignet.

Aus der US-A-4 557 372, die den gattungsgemäßen Stand der Technik beschreibt, ist ein Verfahren und eine Vorrichtung bekannt, bei der auf ein transparentes Förderbandsystem in Laufrichtung hintereinander mehrere Markierungselemente mit schräg zur Laufrichtung ausgerichteten Kanten aufgedruckt sind. Dabei werden die Markierungselemente mit optischen Sensoren abgetastet und aus der abgetasteten Länge der Markierungselemente eine Abweichung vom Geradeauslauf festgestellt. Mit einer derartigen Einrichtung ist es mit vertretbarem technischen Aufwand nicht möglich, auch gleichzeitig den Schlupf des Förderbandes festzustellen.

Desweiteren ist aus der US-A-3 701 464 eine Vorrichtung und ein Verfahren bekannt, das die Ausrichtung von Papierbahnen beim Durchlaufen durch Druckmaschinen in Längs- und Querrichtung überwacht und nachregelt. Dazu werden auf die Papierbahnen mindestens ein Referenzzeichen und bei jedem weiteren Druckdurchlauf parallel dazu ein Vergleichszeichen aufgedruckt und jedes Zeichen durch einen separaten Sensor in Laufrichtung abgetastet. Die aufgedruckten Zeichen bestehen dabei aus einer Linie, die schräg und einer weiteren Linie, die quer zur Laufrichtung angeordnet sind. Dabei werden die Längs- und Seitenabweichung durch den Vergleich des Abtastbeginns und der Abtastlängen beider Zeichen festgestellt. Ein derartiges Verfahren ist für den Einsatz bei Förderbandsystemen wenig praktikabel, da bei jeder Umdrehung das alte Vergleichszeichen gelöscht und ein neues Vergleichszeichen am oder auf dem Förderband angeordnet werden müßte.

Es ist Aufgabe der vorliegenden Erfindung, ein Verfahren und eine Vorrichtung zur Überwachung des Bandlaufs eines Förderbandes oder einer Bandwaage zu schaffen, die eine Erfassung des Bandlaufs bzw. eine Bestimmung der Lage des Bandes in seitlicher Richtung und in Schlupfrichtung ermöglichen und die eine geringe Störanfälligkeit aufweisen. Diese Aufgabe wird durch die in den Patentansprüchen angegebenen Merkmale bei einem Verfahren nach Anspruch 1 und bei einer Vorrichtung nach Anspruch 3 gelöst. Die abhängigen Ansprüche beziehen sich auch auf Ausgestaltungen der Erfindung.

Durch das erfindungsgemäße Verfahren kann die Seitenlage des Förderbandes berührungslos und ohne störanfällige mechanische Elemente ermittelt werden, da der Abtastweg zwischen der geraden und der schrägen Markierungskante des Markierungselements ein eindeutiges Maß für die Seitenabweichung des Förderbandes von der Mittellage darstellt. Darüber hinaus ist die Feststellung eines eventuell vorhandenen Bandschlupfs möglich.

Zweckmäßigerweise werden das Sensorsignal und die Bandgeschwindigkeit in einer Rechenschaltung oder dgl. verarbeitet. Das Ergebnis bzw. die Seitenlage des Förderbandes und gegebenenfalls der Schlupf wird angezeigt, zur Auslösung einer Vorwarnung, eines Alarms oder zur Abschaltung des Bandes oder zur Steuerung des Bandes in die Mittellage verwendet.

Die erfindungsgemäße Vorrichtung weist ein dreieckförmiges Markierungselement auf, wobei eine Dreieckseite im rechten Winkel zur Bandlaufrichtung angeordnet ist. Sie ist damit besonders einfach aufgebaut. Zweckmäßigerweise wird das Markierungselement im wesentlichen als gleichseitiges oder gleichschenkliges Dreieck ausgebildet, dessen Grundlinie senkrecht zur Laufrichtung des Förderbandes verläuft, wobei der Sensor bei Mittelstellung des Förderbandes die Spitze des Dreiecks erfaßt. Hierbei ist der zwischen den beiden Sensorsignalen zurückgelegte Weg des Bandes ein eindeutiges Maß für die Seitenabweichung. Wenn das Markierungselement als rechtwinkliges Dreieck ausgebildet ist, wobei eine Kathete des Dreiecks in Bandlaufrichtung angeordnet ist und der Sensor bei Mittelstellung des Förderbandes die Mitte der Hypotenuse des Dreiecks erfaßt, kann aus den Sensorsignalen auch die Richtung der Abweichung des Förderbandes von der Mittellage erfaßt werden. Das Markierungselement ist zweckmäßigerweise als metallische Schaltfolie ausgebildet. Als Sensor wird vorteilhaft ein berührungsloser Näherungsschalter verwendet.

Die Erfindung wird nachstehend an einem Ausführungsbeispiel schematisch dargestellt und in der Beschreibung näher erläutert. Es zeigen:
- Fig. 1:: Förderband mit einem Markierungselement und einem Näherungsschalter in Draufsicht
- Fig. 2:: unterschiedliche Positionen des Förderbandes bzw. des Markierungselements in Bezug auf den Näherungsschalter

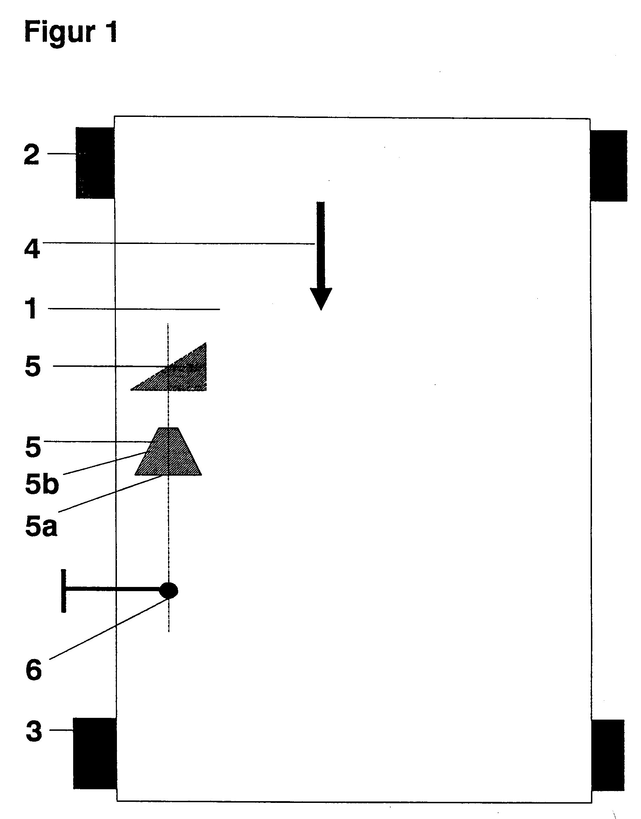

In Fig. 1 ist ein Förderband 1, z. B. das Band einer Dosierbandwaage, das über eine Antriebsrolle 2 und eine Umlenkrolle 3 in Pfeilrichtung 4 umläuft, stark vereinfacht dargestellt. Förderbänder von Dosierbandwaagen laufen üblicherweise mit verhältnismäßig kleinen Geschwindigkeiten, z. B. mit weniger als 0,5 m/s. Im Förderband 1 ist ein Markierungselement bzw. eine Markierungs- oder Abtastfläche 5 eingebaut. Das Markierungselement 5 kann über geeignete Zwischenelemente auch am Förderband angebaut sein. Es ist z. B. als metallische Schaltfolie oder Markierungsfolie ausgebildet.

Das Markierungselement 5 ist im wesentlichen dreieckförmig ausgebildet, z. B. als gleichseitiges oder gleichschenkliges Dreieck, und so angeordnet, daß eine Seite senkrecht zur Laufrichtung 4 des Förderbandes 1 verläuft. Die dieser Seite gegenüberliegende Spitze des Dreiecks kann abgeschnitten sein. Gestrichelt ist eine mögliche Anordnung eines rechtwinkligen Dreiecks dargestellt, bei dessen Verwendung als Markierungselement auch die Richtung der Seitenabweichung festgestellt werden kann. Diese ergibt sich aus der Vergrößerung oder Verkleinerung des Sensorsignals im Vergleich zum Signal bei Mittellage des Förderbandes.

Mit dem Markierungselement 5 zusammenwirkend ist am Grundgestell des Förderbandes oder z. B. am Rahmen einer Bandwaage ein Sensor 6 fest angebaut. Der Sensor kann als induktiver Näherungsschalter ausgebildet sein, der ein Signal abgibt, sobald das Markierungselement 5 unter ihm hindurchläuft. Das Signal beginnt z. B. wenn eine Kante 5a des Markierungselements 5 den Sensor 6 erreicht und endet, wenn sich eine zweite Markierungskante 5b unter dem Sensor befindet. Das Signal kann auch aus je einem Einzelsignal oder Impuls für die Markierungskanten 5a und 5b bestehen, die in geeigneter Weise verarbeitet werden.

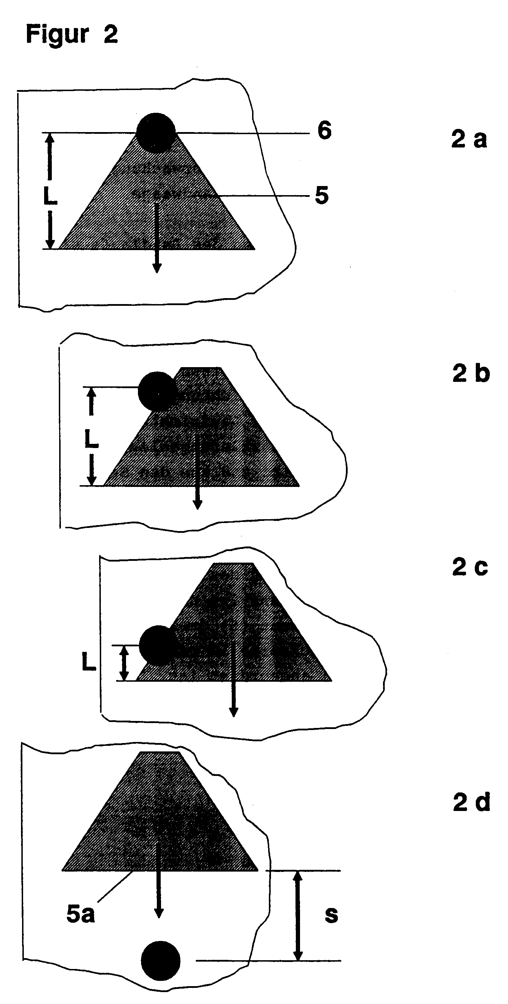

In Fig. 2 sind verschiedene Bandpositionen bzw. Positionen des Markierungselements 5 in Bezug auf den Sensor 6 dargestellt. Die Laufrichtung des Bandes ist durch einen Pfeil angegeben.

Fig. 2a zeigt die Stellung bei einwandfreiem Bandlauf. Das Markierungselement 5 ist in Mittellage unter dem Sensor 6 durchgelaufen. Der Sensor 6 befindet sich am Ende des Durchlaufs über der abgeschnittenen Spitze des dreieckigen Markierungselements. Das durch die Markierungsfläche 5 am Sensor 6 erzeugte Signal hat die Länge L.

Fig. 2b zeigt eine Position mit einer geringen Abweichung des Förderbandes von der Mittellage. In diesem Fall ist die Signallänge L kürzer als bei einwandfreiem Bandlauf. In dieser Stellung kann durch eine geeignete Schaltung z. B. eine Vorwarnung ausgelöst werden.

In Fig. 2c ist eine Bandstellung bzw. eine Stellung des Markierungselements 5 in Bezug auf den Sensor 6 dargestellt, die eine unzulässige Abweichung des Förderbandes von der Mittellage kennzeichnet. Die Signallänge L ist hier wesentlich kürzer als in den Fällen 2a und 2b. Bei dieser Stellung kann z. B. ein Alarm ausgelöst, das Band abgeschaltet oder eine Rücksteuerung des Bandes eingeleitet werden.

Fig. 2d zeigt eine Bandposition, bei der Bandschlupf eingetreten ist. Die Bandgeschwindigkeit wird üblicherweise an einer Antriebs- oder Umlenkrolle (2, 3 in Fig. 1) gemessen. Wenn Bandschlupf eintritt, zeigt sich das bei der dargestellten Anordnung dadurch, daß die zur Bandlaufrichtung senkrechte Kante 5a des Markierungselements 5 den Sensor 6 nicht zu der der theoretischen Bandgeschwindigkeit entsprechenden Zeit erreicht hat. Der Schlupf ergibt sich durch den Abstand s zwischen dem Sensor 6 und der Kante 5a des Markierungselements 5.

Die Signalauswertung zusammen mit der Verarbeitung der Bandgeschwindigkeit kann in einer geeigneten Rechenschaltung erfolgen. Hierbei ist es möglich, die Abweichung des Förderbandes von der Mittellage und den Schlupf anzuzeigen, eine Vorwarnung oder einen Alarm auszulösen, wenn eine bestimmte Abweichung von der Mittellage erreicht ist, das Band abzuschalten oder eine Rücksteuerung des Bandes in die Mittellage zu bewirken.

## Patentansprüche

1. Verfahren zur Überwachung des Bandlaufs eines Förderbandes mit einem am Förderband angeordneten Markierungselement und einem fest angeordneten Sensor zur Abtastung des Markierungselements, dadurch gekennzeichnet, daß das Markierungselement aus einer in das Förderband eingebetteten oder am Förderband angebauten metallenen Markierungsfläche besteht, die durch mindestens eine senkrecht und mindestens eine schräg zur Laufrichtung des Förderbandes ausgerichtete Markierungskante begrenzt wird, wobei die Markierungsfläche in Laufrichtung von nur einem einzigen Sensor abgetastet und aus den Sensorsignalen bei permanent gemessener Bandgeschwindigkeit die Seitenlage des Bandes (1) bzw. seine Abweichung von der Mittelstellung und der Bandschlupf ermittelt wird.

2. Verfahren nach Anspruch 1, dadurch gekennzeichnet, daß die Sensorsignale und die Bandgeschwindigkeit in einer Rechenschaltung oder dgl. verarbeitet werden und daß die Seitenlage des Bandes und gegebenenfalls der Bandschlupf angezeigt, zur Auslösung einer Vorwarnung, eines Alarms oder zur Abschaltung des Bandes oder zur Steuerung des Bandes in Mittellage verwendet werden.

3. Vorrichtung zur Überwachung des Bandlaufs eines Förderbandes mit einem am Förderband (1) angeordneten Markierungselement (5) und einem fest angeordneten Sensor zur Abtastung des Markierungselements, dadurch gekennzeichnet, daß das Markierungselement (5) als in das Förderband (1) eingebaute oder am Förderband angebaute metallische Schaltfolie ausgebildet ist deren Markierungsfläche durch mindestens eine senkrecht und mindestens eine schräg zur Bandlaufrichtung (4) ausgerichtete Markierungskante (5a, 5b) begrenzt wird, und daß ein einziger Sensor (6) vorgesehen ist, der die Markierungsfläche in Laufrichtung des Bandes abtastet und aus dessen Sensorsignalen bei permanent gemessener Bandgeschwindigkeit die Seitenlage des Bandes bzw. seine Abweichung von der Mittelstellung und der Bandschlupf ermittelt wird.

4. Vorrichtung nach Anspruch 3, dadurch gekennzeichnet, daß das Markierungselement (5) als gleichseitiges oder gleichschenkliges Dreieck ausgebildet ist, dessen Grundlinie senkrecht zur Laufrichtung (4) des Bandes (1) verläuft und daß der Sensor (6) bei Mittelstellung des Förderbandes (1) die Spitze des Dreiecks erfaßt.

5. Vorrichtung nach Anspruch 3, dadurch gekennzeichnet, daß das Markierungselement (5) als rechtwinkliges Dreieck ausgebildet ist, wobei eine Kathete des Dreiecks in Bandlaufrichtung angeordnet ist und daß der Sensor (6) bei Mittelstellung des Förderbandes (1) die Mitte der Hypotenuse des Dreiecks erfaßt.

6. Vorrichtung nach einem der vorhergehenden Ansprüche 3 bis 5, dadurch gekennzeichnet, daß der Sensor (6) ein berührungsloser Näherungsschalter ist.

## Claims

1. Method of monitoring the running of a conveyor belt with a marking element arranged on the conveyor belt and a fixed sensor for sensing the marking element, characterised in that the marking element consists of a metal marking surface which is embedded in the conveyor belt or built onto the conveyor belt and is defined by at least one marking edge aligned perpendicular and at least one marking edge aligned obliquely with respect to the direction of travel of the conveyor belt, wherein the marking surface is sensed by only one single sensor in the direction of travel and with a permanently measured belt speed the lateral position of the belt (1) or the deviation thereof from the central position and the belt slip are determined from the sensor signals.

2. Method according to Claim 1, characterised in that the sensor signals and the belt speed are processed in a calculator circuit or the like and that the lateral position of the belt and optionally the belt slip are indicated in order to trigger an advance warning or alarm or are used to switch off the belt or to control the belt in the central position.

3. Device for monitoring the running of a conveyor belt with a marking element (5) arranged on the conveyor belt (1) and a fixed sensor for sensing the marking element, characterised in that the marking element (5) is constructed as a metal foil switch embedded in the conveyor belt (1) or built onto the conveyor belt, the marking surface of which is defined by at least one marking edge (5a, 5b) aligned perpendicular and at least one marking edge aligned obliquely with respect to the direction of belt travel (4), and that one single sensor (6) is provided which senses the marking surface in the direction of travel of the belt and with a permanently measured belt speed the lateral position of the belt or a deviation thereof from the central position and the belt slip are determined from the sensor signals from the said sensor.

4. Device according to Claim 3, characterised in that the marking element (5) is constructed as an equilateral or isosceles triangle, the base line of which extends at right angles to the direction of travel (4) of the belt (1), and that the sensor (6) detects the apex of the triangle when the conveyor belt (1) is in the central position.

5. Device according to Claim 3, characterised in that the marking element (5) is constructed as a right-angled triangle in which one short side of the triangle is arranged in the direction of travel of the belt, and that the sensor (6) detects the centre of the hypotenuse of the triangle when the conveyor belt (1) is in the central position.

6. Device according to one of the preceding Claims 3 to 5, characterised in that the sensor (6) is a non-contact proximity switch.

## Revendications

1. Procédé pour contrôler le déroulement de la bande d'une bande transporteuse avec un élément de marquage placé sur la bande transporteuse et un capteur fixe destiné à détecter l'élément de marquage, caractérisé en ce que l'élément de marquage est constitué d'une surface de marquage métallique noyée dans la bande transporteuse ou appliqué sur celle-ci qui est délimitée par au moins un bord de marquage perpendiculaire à la direction de déroulement de la bande transporteuse et au moins un bord de marquage oblique par rapport à la direction de déroulement de la bande transporteuse, la surface de marquage étant détectée dans la direction du déroulement par un seul capteur et la position latérale de la bande (1) ou son écart par rapport à la position centrale ainsi que le glissement de la bande étant déterminés à partir des signaux du capteur, alors que la vitesse de la bande est mesurée en permanence.

2. Procédé selon la revendication 1, caractérisé en ce que les signaux du capteur et la vitesse de la bande sont traités dans un circuit de calcul ou similaire et en ce que la position latérale de la bande et éventuellement son glissement sont indiqués, et utilisés pour déclencher un avertissement, une alarme ou pour mettre à l'arrêt la bande ou pour commander la bande en position centrale.

3. Dispositif de contrôle du déroulement de la bande d'une bande transporteuse avec un élément de marquage (5) placé sur la bande transporteuse (1) et un capteur fixe destiné à détecter l'élément de marquage, caractérisé en ce que l'élément de marquage (5), est conçu comme une feuille de commutation métallique, intégrée dans la bande transporteuse (1) ou appliquée sur celle-ci, dont la surface de marquage est délimitée par au moins un bord de marquage (5a) perpendiculaire à la direction de déroulement de la bande (4) et au moins un bord de marquage (5b) oblique par rapport à la direction du déroulement de la bande (4), et en ce qu'il est prévu un seul capteur (6) qui détecte la surface de marquage dans la direction de déroulement de la bande et la position latérale de la bande 1 ou son écart par rapport à la position centrale ainsi que le glissement de la bande étant déterminés à partir des signaux du capteur, alors que la vitesse de la bande est mesurée en permanence.

4. Dispositif sel on la revendication 3, caractérisé en ce que l'élément de marquage (5) est un triangle équilatéral ou isocèle dont la ligne de base est perpendiculaire à la direction de déroulement (4) de la bande (1) et en ce que le capteur (6) détecte le sommet du triangle en position centrale de la bande transporteuse (1).

5. Dispositif sel on la revendication 3, caractérisé en ce que l'élément de marquage (5) est un triangle rectangle, un côté de l'angle droit du triangle s'étendant dans la direction de déroulement de la bande et en ce que le capteur (6) détecte le milieu de l'hypoténuse du triangle, en position centrale de la bande transporteuse (1).

6. Dispositif sel on l'une des revendications précédentes 3 à 5, caractérisé en ce que le capteur (6) est un interrupteur de proximité sans contact.
